# EUROPÄISCHE PATENTANMELDUNG

(11) **EP 3 136 532 A1**
(43) Veröffentlichungstag der Anmeldung: **01.03.2017**
(21) Anmeldenummer: 15182216.0
(22) Anmeldetag: 24.08.2015
(51) Int. Cl.: H02J 3/32, H02J 13/00

(54) **SYSTEM UND VERFAHREN ZUR ERBRINGUNG EINER REGELLEISTUNG FÜR EIN STROMNETZ**

(71) Anmelder: Caterva GmbH, 82049 Pullach (DE)
(72) Erfinder: Wienböker, Jürgen, 83626 Valley (DE); Möller, Marc, 81373 München (DE); Gersch, Roland, 80686 München (DE)
(74) Vertreter: Isarpatent

(57) **Zusammenfassung**

Regelsystem (1) zur Erbringung einer Regelleistung, RL, für ein mit einer Nominal-Netzfrequenz (fₙₒₘ) betriebenes Stromnetz (SN) bei einer Abweichung von der Nominal-Netzfrequenz (fₙₒₘ), wobei das Regelsystem (1) aufweist: mehrere Energiespeichersystemeinheiten, ESS, (2-i), die jeweils über einen Wechselrichter, WR, mit dem Stromnetz (SN) verbunden sind und jeweils mindestens einen Energiespeicher (ES) enthalten; und eine Leitstelle, LS, (4), die ein zwischen einer minimalen Netzfrequenz (fₘᵢₙ) und einer maximalen Netzfrequenz (fₘₐₓ) um die Nominal-Netz-frequenz (fₙₒₘ) gelegenes Frequenzabweichungsintervall (FAI) in Sub-Frequenzintervalle (SFI) aufteilt und in Abhängigkeit der Ladezustände (SOC) der in den Energiespeichersystemeinheiten, ESS, enthaltenen Energiespeicher (ES) jedem Sub-Frequenzintervall (SFI) unterschiedliche Energiespeichersystemeinheiten, ESS, (2-i) zur Bildung eines ESS-Clusters für das jeweilige Sub-Frequenzinter-vall (SFI) zuteilt, der einen Leistungsanteil an der durch das Regelsystem (1) zu erbringenden Regelleistung in dem jeweiligen Sub-Frequenzintervall (SFI) liefert.

## Beschreibung

Die Erfindung betrifft ein Verfahren und ein Regelsystem zur Erbringung einer Regelleistung für ein mit einer Nominal-Netzfrequenz betriebenes Stromnetz bzw. Stromversorgungsnetz bei einer Abweichung von der Nominal-Netzfrequenz.

Die Regelleistung, welche auch als Reserveleistung oder Regelenergie bezeichnet wird, gewährleistet den Ausgleich von Ungleichgewichten (bei unvorhergesehenen Ereignissen) in einem Stromversorgungsnetz. Ein Stromversorgungsnetz wird mit einer Nominal-Netzfrequenz betrieben. Diese Nominal-Netzfrequenz beträgt beispielsweise beim europäischen Stromversorgungsnetz 50 Hz. Im normalen Netzbetrieb ist eine maximale Abweichung der Netzfrequenz von beispielsweise +/- 200 mHz erlaubt. Die Regelleistung dient dazu, in Kraftwerken gewonnene elektrische Leistung und von Stromkunden entnommene elektrische Leistung samt Übertragungsverlusten im Gleichgewicht zu halten. Elektrische Stromversorgungsnetze können keine Energie speichern, sodass zu jedem Zeitpunkt die eingespeiste elektrische Leistung der Summe aus entnommener elektrischer Leistung und der auftretenden Verlustleistung infolge von Stromtransport entsprechen muss. Abweichungen davon resultieren im Stromversorgungsnetz in einer Änderung der Netzfrequenz, welche im gesamten Stromversorgungsnetz bzw. Stromnetz einheitlich synchron ist. Bei einem Überangebot von elektrischer Leistung kommt es zu einer Abweichung der Netzfrequenz über die Nominal-Netzfrequenz des Stromnetzes, während bei einem Unterangebot von Leistung eine sogenannte Unterfrequenz, d.h. eine Abweichung der Netzfrequenz unterhalb der Nominal-Netzfrequenz, auftritt.

Für kurzfristige Frequenzschwankungen wird zum Ausgleich die sogenannte Primärregelleistung genutzt. Die Primärregelung dient dazu, Ungleichgewichte zwischen physikalischem Leistungsangebot und Leistungsnachfrage auszugleichen und hat als Ziel die Wiederherstellung einer stabilen Netzfrequenz in dem Stromversorgungsnetz. Jeder Netzbetreiber innerhalb des Verbundnetzes muss innerhalb eines bestimmten Zeitraums einen gewissen Prozentsatz seiner erzeugten Leistung als Primärregelreserve zur Verfügung stellen. Die Primärregelung setzt innerhalb von wenigen Sekunden ein, um die Netzfrequenz des Stromnetzes wieder auf die Nominal-Netzfrequenz von beispielsweise 50 Hz zurückzuführen. Mehr Regelleistung gleicht somit kurzfristige Ungleichgewichte zwischen Bereitstellung und Verbrauch von elektrischem Strom bzw. elektrischer Leistung im Stromversorgungsnetz aus. Bestehende Ungleichgewichte können dabei über eine Frequenzabweichung zur Nominal-Netzfrequenz festgestellt werden. Bei einer Überversorgung, d.h. bei einer Netzfrequenz von mehr als 50 Hz, wird eine negative Primärregelleistung erbracht, während bei einer Unterversorgung, d.h. bei einer Netzfrequenz von weniger als 50 Hz, eine positive Primärregelleistung erbracht wird. Die Regelleistung wird durch dafür vorgesehene technische Einheiten bereitgestellt und muss linear bis zu einer Frequenzabweichung von +/- 200 mHz erbracht werden.

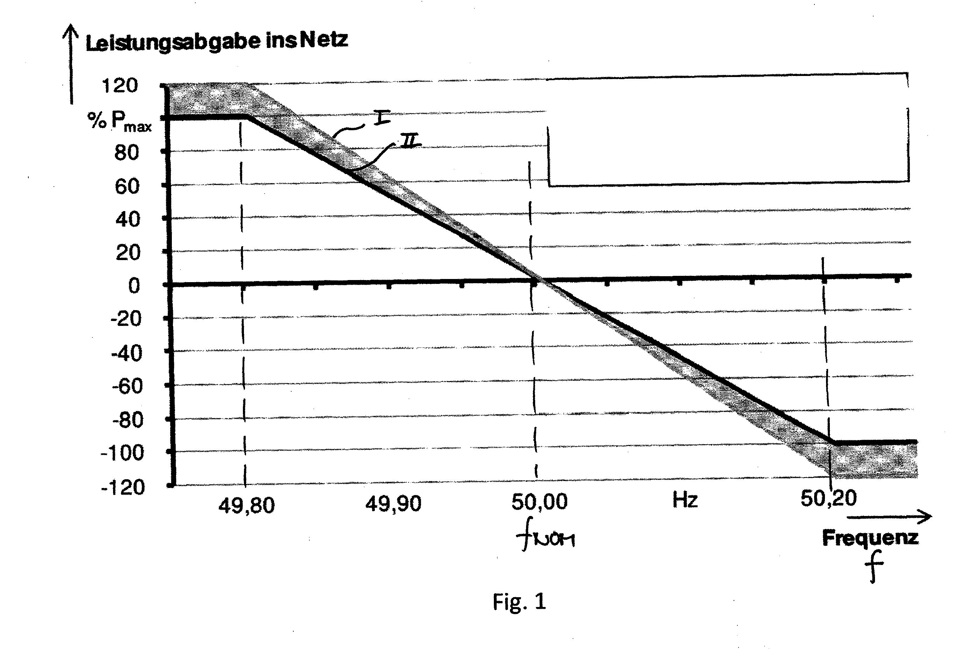

Fig. 1 zeigt die Leistungsabgabe in das Stromnetz in Abhängigkeit von der Netzfrequenz f für eine Erbringung einer Primärregelleistung PRL. Liegt die Netzfrequenz f bei einer nominalen Netzfrequenz von 50 Hz erfolgt keine Primärregelung. In einem vorgegebenen Frequenzabweichungsintervall FAI von +/- 200 mHz wird eine Primärregelleistung erbracht. Liegt die Netzfrequenz f unterhalb der Nominal-Netzfrequenz fₙₒₘ von 50 Hz, erfolgt eine positive Primärregelleistung pPRL, wobei elektrische Leistung P in das Stromnetz eingespeist wird. Liegt umgekehrt die Netzfrequenz f über der Nominal-Netzfrequenz fₙₒₘ, erfolgt eine negative Primärregelleistung nPRL. Wie in Fig. 1 dargestellt, erfolgt die Regelung der Regelleistung RL gemäß einer linearen Leistungskennlinie in einem Bereich zwischen einer maximalen (Kurve I) und minimalen Leistungskennlinie (Kurve II). Die für die Regelleistung notwendige elektrische Energie kann gespeichert werden. Hierzu werden in einem herkömmlichen Stromnetz Gleichstromspeicher bzw. Batterien eingesetzt. Die Schnittstelle zwischen dem Stromversorgungsnetz und dem Energiespeicher wird durch einen Umrichter bzw. Wechselrichter gebildet, der Wechselstrom in Gleichstrom sowie Gleichstrom in Wechselstrom umgeformt. Dabei ist der Wirkungsgrad des Umrichters leistungsabhängig. Je höher die umgesetzte Leistung P ist, desto höher ist der Wirkungsgrad des Wechselrichters. Zudem existiert eine Mindestverlustleistung, die der Wechselrichter bzw. Umrichter selbst bei kleinsten Leistungen verbraucht. Erst bei Nullleistung wird diese Mindestverlustleistung vermieden.

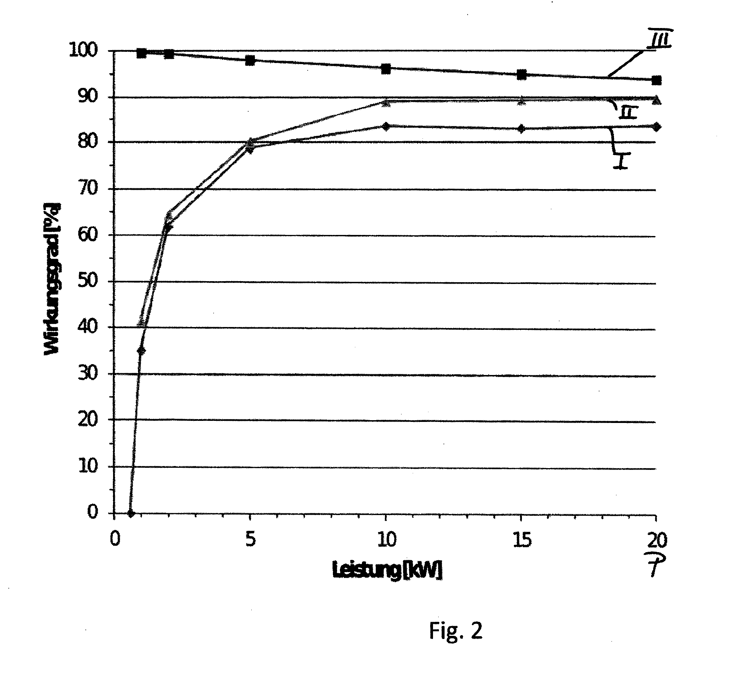

Fig. 2 zeigt den Wirkungsgrad einer Energiespeichersystemeinheit ESS, die einen Energiespeicher bzw. eine Batterie sowie einen Wechselrichter umfasst, in Abhängigkeit von der elektrischen Leistung P. Der Wirkungsgrad des Gesamtsystems bzw. der Energiespeichersystemeinheit ist in der Kurve I dargestellt. Die Kurve II zeigt den Wirkungsgrad des Wechselrichters innerhalb der Energiespeichersystemeinheit und die Kurve III zeigt den Wirkungsgrad des in der Energiespeichersystemeinheit enthaltenen Energiespeichers bzw. der darin enthaltenen Batterie.

Der Arbeitspunkt AP eines Wechselrichters bzw. Umrichters innerhalb einer Energiespeichersystemeinheit ESS bei der Erbringung einer Primärregelleistung PRL befindet sich im unteren Leistungsbereich (P < 1 KW). Wie man aus Fig. 2 erkennen kann, ist in diesem Leistungsbereich der Wirkungsgrad des Wechselrichters relativ gering, wodurch hohe elektrische Verluste beim Betrieb des Wechselrichters entstehen. Dieses Verhalten ist dadurch bedingt, dass kleine Störungen des Gleichgewichts innerhalb des Stromversorgungsnetzes bedeutend häufiger auftreten als große Störungen.

Des Weiteren werden bei hohen Lade- bzw. Entladeleistungen die verwendeten Energiespeicher bzw. Batterien stark belastet, was dazu führt, dass die Lebensdauer der Energiespeicher signifikant abnimmt.

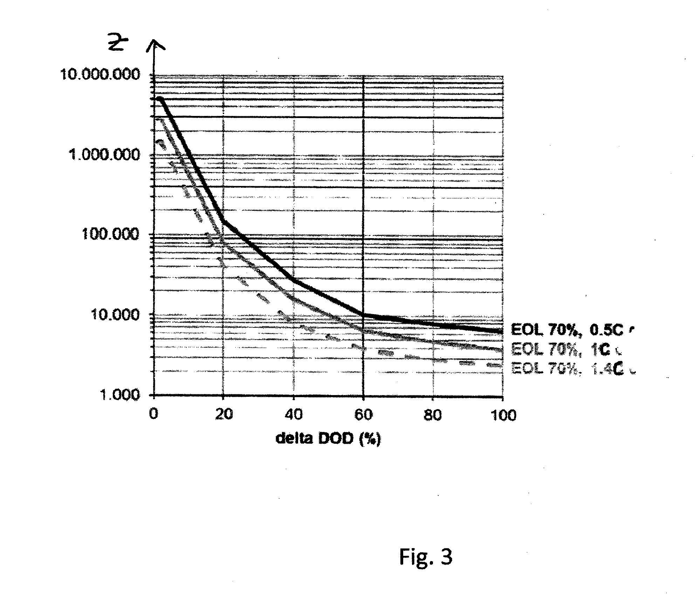

Fig. 3 zeigt die Lebensdauer von Energiespeichern bzw. Batterien in Abhängigkeit von der Anzahl Z von Lade- bzw. Entladezyklen in Abhängigkeit der Entladetiefe DOD (Depth of Discharge) sowie in Abhängigkeit der elektrischen Leistung.

Der Wirkungsgrad der Batterie bzw. des Energiespeichers sinkt zudem mit der Wechselrichterleistung. Dieser Effekt ist allerdings bedeutend kleiner als die Erhöhung des Wirkungsgrades des Wechselrichters mit zunehmender Leistung P. Daher kann dieser Effekt implizit als Teil der Änderung des Wirkungsgrades des Wechselrichters berücksichtigt werden.

Es ist eine Aufgabe der vorliegenden Erfindung, ein Verfahren und ein System zur Erbringung einer Regelleistung für ein Stromnetz zu schaffen, bei dem die auftretende Verlustleistung von Energiespeichersystemeinheiten minimiert wird.

Diese Aufgabe wird erfindungsgemäß durch ein Regelsystem mit den in Patentanspruch 1 angegebenen Merkmalen gelöst.

Die Erfindung schafft demnach ein Regelsystem zur Erbringung einer Regelleistung für ein mit einer Nominal-Netzfrequenz betriebenes Stromnetz bei einer Abweichung von der Nominal-Netzfrequenz,
wobei das Regelsystem aufweist:
mehrere Energiespeichersystemeinheiten, die jeweils über einen Wechselrichter mit dem Stromnetz verbunden sind und jeweils mindestens einen Energiespeicher enthalten und
eine Leitstelle, die ein zwischen einer minimalen Netzfrequenz und einer maximalen Netzfrequenz um die Nominal-Netzfrequenz gelegenes Frequenzabweichungsintervall in Sub-Frequenzintervalle aufteilt und in Abhängigkeit der Ladezustände der in den Energiespeichersystemeinheiten enthaltenen Energiespeicher jedem Sub-Frequenzintervall unterschiedliche Energiespeichersystemeinheiten zur Bildung eines ESS-Clusters für das jeweilige Sub-Frequenzintervall zuteilt, der einen Leistungsanteil an der durch das Regelsystem zu erbringenden Regelleistung in jedem Sub-Frequenzintervall liefert.

Bei dem erfindungsgemäßen Regelsystem werden die Wechselrichter der verschiedenen Energiespeichersystemeinheiten jeweils bei einem Arbeitspunkt betrieben, bei dem der Wirkungsgrad des jeweiligen Wechselrichters relativ hoch ist und somit die auftretende Verlustleistung des Wechselrichters gering ist. Es werden somit Cluster von Energiespeichersystemeinheiten ESS derart betrieben, dass deren Wechselrichter gut ausgelastet sind und bei einem hohen Wirkungsgrad arbeiten.

Bei einer möglichen Ausführungsform des erfindungsgemäßen Regelsystems weisen die Energiespeichersystemeinheiten jeweils eine lokale Steuereinheit auf, die über ein Funknetz mit der Leitstelle des Regelsystems verbunden sind.

Bei einer weiteren möglichen Ausführungsform des erfindungsgemäßen Regelsystems weisen die Energiespeichersystemeinheiten jeweils eine lokale Steuereinheit auf, die über ein leitungsgebundenes Datennetzwerk mit der Leitstelle des Regelsystems verbunden sind.

Bei einer weiteren möglichen Ausführungsform des erfindungsgemäßen Regelsystems erhält die lokale Steuereinheit einer Energiespeichersystemeinheit den Ladezustand des Energiespeichers innerhalb der Energiespeichersystemeinheit von einer Managementeinheit des Energiespeichers und meldet den Ladezustand an die Leitstelle des Regelsystems.

Bei einer weiteren möglichen Ausführungsform des erfindungsgemäßen Regelsystems sortiert die Leitstelle des Regelsystems die Energiespeichersystemeinheiten entsprechend der gemeldeten Ladezustände der in den Energiespeichersystemeinheiten enthaltenen Energiespeicher entsprechend ihrer Fähigkeit zur Erbringung von Regelleistung für eine positive Regelleistung und eine negative Regelleistung getrennt.

Bei einer weiteren möglichen Ausführungsform des erfindungsgemäßen Regelsystems steuert die Leitstelle des Regelsystems die lokalen Steuereinheiten der Energiespeichersystemeinheiten zur Abgabe einer positiven Regelleistung an das Stromnetz über die Wechselrichter der Energiespeichersystemeinheiten, falls die gemessene Netzfrequenz des Stromnetzes unterhalb der Nominal-Netzfrequenz liegt.

Bei einer weiteren möglichen Ausführungsform des erfindungsgemäßen Regelsystems steuert die Leitstelle des Regelsystems die lokalen Steuereinheiten der Energiespeichersystemeinheiten zur Abgabe einer negativen Regelleistung an das Stromnetz über die Wechselrichter der Energiespeichersystemeinheiten, falls die gemessene Netzfrequenz des Stromnetzes oberhalb der Nominalnetzfrequenz liegt.

Bei einer weiteren möglichen Ausführungsform des erfindungsgemäßen Regelsystems bildet die Leitstelle des Regelsystems zur Erbringung einer positiven Regelleistung die dafür erforderlichen ESS-Cluster aus Energiespeichersystemeinheiten, deren Energiespeicher hohe Ladezustände aufweisen.

Bei einer weiteren möglichen Ausführungsform des erfindungsgemäßen Regelsystems bildet die Leitstelle zur Erbringung einer negativen Regelleistung die dafür erforderlichen ESS-Cluster aus Energiespeichersystemeinheiten, deren Energiespeicher niedrige Ladezustände aufweisen.

Bei einer weiteren möglichen Ausführungsform des erfindungsgemäßen Regelsystems fügt die Leitstelle zur Erbringung einer Regelleistung einem für das Sub-Frequenzintervall vorgesehenen ESS-Cluster die entsprechend der Ladezustände sortierten Energiespeichersystemeinheiten der Reihe nach so lange hinzu, bis ein durch den ESS-Cluster zu erbringender Leistungsanteil an der durch das Regelsystem insgesamt zu erbringenden Regelleistung innerhalb des Sub-Frequenzintervalls durch den entsprechenden ESS-Cluster erbracht wird.

Bei einer weiteren möglichen Ausführungsform des erfindungsgemäßen Regelsystems bildet die Leitstelle des Regelsystems verschiedenes ESS-Cluster sowohl für eine durch das Regelsystem zu erbringende positive Regelleistung als auch für eine durch das Regelsystem zu erbringende negative Regelleistung.

Bei einer weiteren möglichen Ausführungsform des erfindungsgemäßen Regelsystems generiert die Leitstelle des Regelsystems nach erfolgter ESS-Clusterbildung mindestens eine Policy (Regelsatz) zur Leistungserbringung für jede Energiespeichersystemeinheit des Regelsystems und überträgt die gebildete Policy an die lokale Steuereinheit der jeweiligen Energiespeichersystemeinheit.

Bei einer weiteren möglichen Ausführungsform des erfindungsgemäßen Regelsystems gibt die für eine Energiespeichersystemeinheit eines ESS-Clusters generierte Policy zur Leistungserbringung die beiden Grenzfrequenzen des entsprechenden Sub-Frequenzintervalls und eine durch die Energiespeichersystemeinheit innerhalb dieses Sub-Frequenzintervalls zu erbringende Leistung an.

Bei einer weiteren möglichen Ausführungsform des erfindungsgemäßen Regelsystems führt die lokale Steuereinheit einer Energiespeichersystemeinheit die von der Leitstelle des Regelsystems erhaltenen Policies zur Leistungserbringung in Abhängigkeit einer gemessenen Netzfrequenz des Stromnetzes automatisch aus und überträgt eine entsprechende Rückmeldung an die Leitstelle des Regelsystems.

Bei einer weiteren möglichen Ausführungsform des erfindungsgemäßen Regelsystems weisen die Energiespeichersystemeinheiten des Regelsystems jeweils eine lokale Frequenzmesseinheit zur Messung der Netzfrequenz des Stromnetzes auf.

Bei einer weiteren möglichen Ausführungsform des erfindungsgemäßen Regelsystems teilt die Leitstelle des Regelsystems das Frequenzabweichungsintervall symmetrisch oder asymmetrisch in verschiedene Sub-Frequenzintervalle auf.

Bei einer weiteren möglichen Ausführungsform des erfindungsgemäßen Regelsystems gibt das Regelsystem eine positive oder eine negative Regelleistung an das Stromnetz zur Netzstabilisierung ab.

Bei der Regelleistung handelt es sich bei einer möglichen Ausführungsform um eine Primärregelleistung, die durch das Regelsystem an das Stromnetz zur Netzstabilisierung abgegeben wird.

Es wird ferner gemäß einem weiteren Aspekt ein Stromnetz mit den in Patentanspruch 14 angegebenen Merkmalen geschaffen.

Es wird demnach ein Stromnetz mit einem Übertragungsnetz und einem Verteilnetz geschaffen, an das mindestens ein erfindungsgemäßes Regelsystem angeschlossen ist, welches eine Regelleistung zur Netzstabilisierung des Stromnetzes liefert, wobei das Regelsystem
mehrere Energiespeichersystemeinheiten aufweist, die jeweils über einen Wechselrichter mit dem Stromnetz verbunden sind und jeweils mindestens einen Energiespeicher enthalten und
eine Leitstelle, die ein zwischen einer minimalen Netzfrequenz und einer maximalen Netzfrequenz um die Nominal-Netzfrequenz gelegenes Frequenzabweichungsintervall in Sub-Frequenzintervalle aufteilt und in Abhängigkeit der Ladezustände der in den Energiespeichersystemeinheiten enthaltenen Energiespeicher jedem Sub-Frequenzintervall unterschiedliche Energiespeichersystemeinheiten zur Bildung eines ESS-Clusters für das jeweilige Sub-Frequenzintervall zuteilt, der einen Leistungsanteil an der durch das Regelsystem zu erbringenden Regelleistung in dem jeweiligen Sub-Frequenzintervall liefert.

Die Erfindung schafft ferner gemäß einem weiteren Aspekt eine Leitstelle mit den in Patentanspruch 15 angegebenen Merkmalen.

Die Erfindung schafft demnach eine Leitstelle für ein Regelsystem, wobei die Leitstelle eine Steuereinheit aufweist, die ein zwischen einer minimalen Netzfrequenz und einer maximalen Netzfrequenz um eine Nominalnetzfrequenz gelegenes Frequenzabweichungsintervall in Sub-Frequenzintervalle aufteilt und in Abhängigkeit von gemeldeten Ladezuständen von in den Energiespeichersystemeinheiten enthaltenen Energiespeichern jedem Sub-Frequenzintervall unterschiedliche Energiespeichersystemeinheiten zur Bildung eines ESS-Clusters für das jeweilige Sub-Frequenzintervall zuteilt.

Die Erfindung schafft ferner gemäß einem weiteren Aspekt eine Energiespeichersystemeinheit für ein Regelsystem mit den in Patentanspruch 16 angegebenen Merkmalen.

Die Erfindung schafft demnach eine Energiespeichersystemeinheit für ein Regelsystem mit mindestens einem Energiespeicher zur Speicherung elektrischer Energie,
einem Wechselrichter zur Stromwandlung zwischen Wechselstrom und Gleichstrom, der an das Stromnetz angeschlossen ist und mit
einer lokalen Steuereinheit, die über eine Schnittstelle mit der Leitstelle des Regelsystems verbunden ist, wobei die lokale Steuereinheit der Leitstelle über die Schnittstelle den momentanen Ladezustand des Energiespeichers an die Leitstelle meldet und über die Schnittstelle mindestens eine von der Leitstelle generierte Policy zur Leistungserbringung empfängt.

Bei einer möglichen Ausführungsform der erfindungsgemäßen Energiespeichersystemeinheit weist die Energiespeichersystemeinheit ferner eine lokale Frequenzmesseinheit auf, die eine momentane Netzfrequenz des Stromnetzes misst und an die lokale Steuereinheit der Energiespeichersystemeinheit meldet.

Bei einer weiteren möglichen Ausführungsform der erfindungsgemäßen Energiespeichersystemeinheit führt die lokale Steuereinheit der Energiespeichersystemeinheit die von der Leitstelle empfangene Policy zur Leistungserbringung in Abhängigkeit von der gemessenen momentanen Netzfrequenz des Stromnetzes durch Ansteuerung des Wechselrichters der Energiespeichersystemeinheit automatisch aus.

Die Erfindung schafft ferner gemäß einem weiteren Aspekt ein Verfahren zur Erbringung einer Regelleistung für ein Stromnetz mit den in Patentanspruch 19 angegebenen Merkmalen.

Die Erfindung schafft demnach ein Verfahren zur Erbringung einer Regelleistung für ein mit einer nominalen Netzfrequenz betriebenes Stromnetz bei Abweichen von der nominalen Netzfrequenz mit den Schritten:
Aufteilen einer zwischen einer minimalen Netzfrequenz und einer maximalen Netzfrequenz um die nominale Netzfrequenz gelegenes Frequenzabweichungsintervall in Sub-Frequenzintervalle durch eine Leitstelle eines Regelsystems und
Zuteilen von Energiespeichersystemeinheiten des Regelsystems zu den Sub-Frequenzintervallen zur Bildung von ESS-Clustern für die verschiedenen Sub-Frequenzintervalle,
wobei die gebildeten ESS-Cluster jeweils einen Leistungsanteil an der durch das Regelsystem insgesamt zu erbringenden Regelleistung in dem jeweiligen Sub-Frequenzintervall liefern.

Im Weiteren werden mögliche Ausführungsformen des erfindungsgemäßen Systems und Verfahrens zur Erbringung einer Regelleistung unter Bezugnahme auf die beigefügten Figuren näher erläutert.

Es zeigen:
- Fig. 1: ein Diagramm zur Erläuterung einer durchgeführten Leistungsregelung innerhalb eines herkömmlichen Stromnetzes;
- Fig. 2: ein Diagramm zur Darstellung der Wirkungsgrade bei einem herkömmlichen Energiespeichersystem zur Erläuterung eines der Erfindung zugrunde liegenden technischen Problems;
- Fig. 3: ein Diagramm zur Darstellung der Lebensdauer von Energiespeichern in Abhängigkeit von Lade- bzw. Entladezyklen;
- Fig. 4: eine Anordnung zur Darstellung eines Ausführungsbeispiels eines erfindungsgemäßen Regelsystems;
- Fig. 5: ein Diagramm zur Erläuterung der Funktionsweise einer Ausführungsform des erfindungsgemäßen Regelsystems;
- Fig. 6: ein weiteres Diagramm zur Erläuterung der Funktionsweise einer Ausführungsform des erfindungsgemäßen Regelsystems;
- Fig. 7: ein einfaches Ablaufdiagramm zur Darstellung eines Ausführungsbeispiels des erfindungsgemäßen Verfahrens zur Erbringung einer Regelleistung für ein Stromnetz.

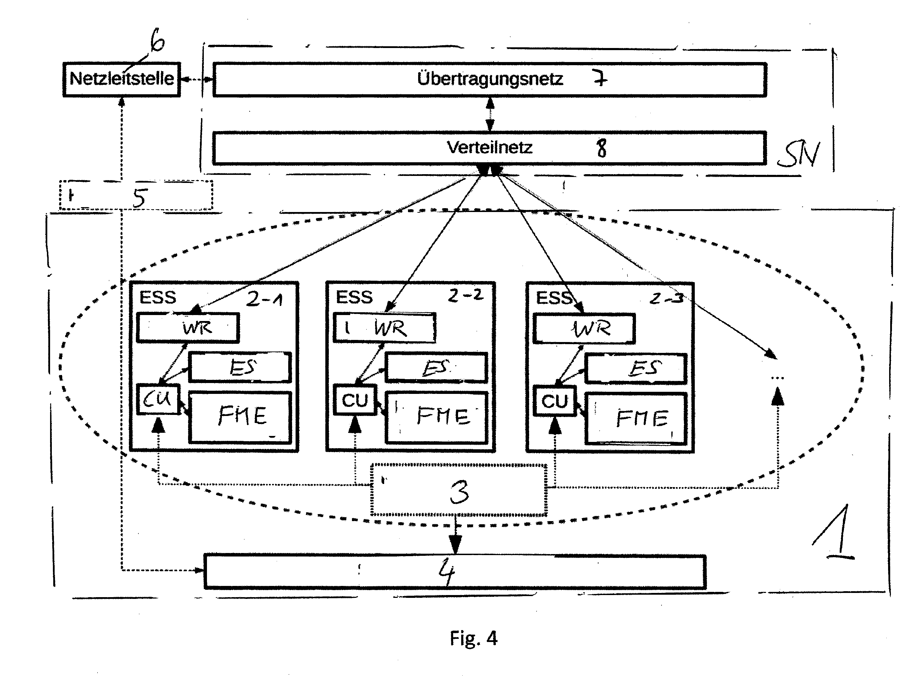

Wie man in Fig. 4 erkennen kann, weist ein Regelsystem 1 gemäß der Erfindung bei dem dargestellten Ausführungsbeispiel mehrere Energiespeichersystemeinheiten ESS 2-1, 2-2, 2-3 auf. Die Anzahl der Energiespeichersystemeinheiten ESS 2-i, kann variieren. Bei dem in Fig. 4 dargestellten Ausführungsbeispiel enthält das Regelsystem 1 drei Energiespeichersystemeinheiten 2-1, 2-2, 2-3. Das Regelsystem 1 weist mindestens eine Energiespeichersystemeinheit 2-i auf. Die Energiespeichersystemeinheiten 2-i weisen jeweils eine lokale Steuereinheit CU auf, die über ein Funknetz 3 mit einer Leitstelle 4 des Regelsystems 1 verbunden sind. Alternativ können die lokalen Steuereinheiten CU der verschiedenen Energiespeichersystemeinheiten über ein leitungsgebundenes Datennetzwerk mit der Leitstelle 4 verbunden sein. Bei der Leitstelle 4 handelt es sich um eine lokale Leitstelle des jeweiligen Regelsystems 1, die auch als Schwarmleitstelle,SLS, bezeichnet werden kann. Diese Schwarmleitstelle 4 ist für eine Gruppe bzw. einen Schwarm von Energiespeichersystemeinheiten 2-i zuständig. Die Schwarmleitstelle 4 des Regelsystems 1 ist vorzugsweise über eine weitere Kommunikationsverbindung 5 mit einer Netzleitstelle 6 des Stromnetzes SN verbunden. Bei dem in Fig. 4 dargestellten Ausführungsbeispiel weist das Stromnetz SN ein Übertragungsnetz 7 und ein Verteilnetz 8 auf. Das Stromnetz SN ist vorzugsweise ein Wechselstromnetz, das mit einer Nominal-Netzfrequenz fₙₒₘ von beispielsweise 50 Hz betrieben wird. Wie man in Fig. 4 erkennen kann, besitzt jede Energiespeichersystemeinheit 2-i jeweils einen Umrichter bzw. einen Wechselrichter WR, der mit dem Verteilnetz 8 des Stromnetzes SN verbunden ist. Zudem enthält jede Energiespeichersystemeinheit 2-i mindestens einen Energiespeicher ES zur Speicherung elektrischer Energie. Der Energiespeicher ES kann eine oder mehrere Batterien bzw. Akkumulatoren umfassen. Der Energiespeicher ES dient zur Speicherung elektrischer Energie. Bei dem in Fig. 4 dargestellten Ausführungsbeispiel enthält jede Energiespeichersystemeinheit 2-i zudem eine lokale Frequenzmesseinheit FME zur Messung der momentanen Netzfrequenz f des Stromnetzes SN.

Die Leitstelle 4 des Regelsystems 1 teilt ein zwischen einer minimalen Netzfrequenz fₘᵢₙ und einer maximalen Netzfrequenz fₘₐₓ um die Nominal-Netzfrequenz fₙₒₘ gelegenes Frequenzabweichungsintervall FAI in Sub-Frequenzintervalle SFI auf und teilt in Abhängigkeit der Ladezustände SOC der in den Energiespeichersystemeinheiten 2-i enthaltenen Energiespeicher ES jedem Sub-Frequenzintervall SFI unterschiedliche Energiespeichersystemeinheiten zur Bildung eines ESS-Clusters für das jeweilige Sub-Frequenzintervall SFI zu, wobei der gebildete ESS-Cluster einen Leistungsanteil an der durch das Regelsystem 1 zu erbringenden Regelleistung RL in dem jeweiligen Sub-Frequenzintervall SFI liefert. Die Energiespeicher ES verfügen bei einer möglichen Ausführungsform über eine Managementeinheit bzw. Batteriemanagementeinheit und melden den aktuellen Ladezustand SOC des Energiespeichers ES an die lokale Steuereinheit CU der Energiespeichersystemeinheit 2-i. Bei einer möglichen Ausführungsform leitet die lokale Steuereinheit CU den ihr gemeldeten Ladezustand SOC des jeweiligen Energiespeichers ES über das Netzwerk 3 an die Leitstelle 4 des Regelsystems 1 weiter. Die Leitstelle 4 des Regelsystems 1 sortiert die Energiespeichersystemeinheiten 2-i entsprechend der gemeldeten Ladezustände der in den Energiespeichersystemeinheiten 2-i enthaltenen Energiespeicher ES entsprechend ihrer Fähigkeit zur Erbringung von Regelleistung für eine positive Regelleistung pRL und für eine negative Regelleistung nRL getrennt. Die Leitstelle 4 bildet vorzugsweise verschiedene ESS-Cluster sowohl für eine durch das Regelsystem 1 zu erbringende positive Regelleistung pRL als auch für eine durch das Regelsystem 1 zu erbringende negative Regelleistung nRL.

Falls die gemessene Netzfrequenz f des Stromnetzes SN unterhalb der Nominal-Netzfrequenz fₙₒₘ des Stromnetzes SN liegt, steuert die Leitstelle 4 des Regelsystems 1 die lokalen Steuereinheiten CU der verschiedenen Energiespeichersystemeinheiten 2-i zur Abgabe einer positiven Regelleistung pRL über die Wechselrichter WR der Energiespeichersystemeinheiten 2-i. Umgekehrt, falls die gemessene Netzfrequenz f des Stromnetzes SN oberhalb der nominalen Netzfrequenz fₙₒₘ liegt, steuert die Leitstelle 4 des Regelsystems 1 die lokale Steuereinheiten CU der verschiedenen Energiespeichersystemeinheiten 2-i zur Abgabe einer negativen Regelleistung nRL an das Stromnetz SN über die Wechselrichter WR der Energiespeichersystemeinheiten 2-i. Die Leitstelle 4 bildet dabei zur Erbringung einer positiven Regelleistung pRL die dafür erforderlichen ESS-Cluster aus Energiespeichersystemeinheiten 2-i, deren Energiespeicher ES hohe Ladezustände SOC aufweisen. Ferner bildet die Leitstelle 4 zur Erbringung einer negativen Regelleistung nRL die dafür erforderlichen ESS-Cluster aus Energiespeichersystemeinheiten 2-i, deren Energiespeicher ES niedrige Ladezustände SOC aufweisen. Zur Erbringung einer Regelleistung RL fügt die Leitstelle 4 einem für das Sub-Frequenzintervall SFI vorgesehenen ESS-Cluster die entsprechend der Ladezustände SOC sortierten Energiespeichersystemeinheiten 2-i der Reihe nach so lange hinzu, bis ein durch den jeweiligen ESS-Cluster 2-i zu erbringender Leistungsanteil an der durch das Regelsystem 1 insgesamt zu erbringenden Regelleistung innerhalb des zugehörigen Sub-Frequenzintervalls SFI durch den entsprechenden ESS-Cluster erbracht wird.

Nach erfolgter ESS-Clusterbildung generiert die Leitstelle 4 des Regelsystems 1 mindestens eine Policy zur Leistungserbringung für jede Energiespeichersystemeinheit 2-i des Regelsystems 1 und überträgt diese generierte Policy zur Leistungserbringung an die lokale Steuereinheit CU der jeweiligen Energiespeichersystemeinheit 2-i. Die für eine Energiespeichersystemeinheit 2-i eines ESS-Clusters generierte Policy zur Leistungserbringung gibt vorzugsweise die beiden Grenzfrequenzen des entsprechenden Sub-Frequenzintervalls SFI und eine durch die Energiespeichersystemeinheit 2-i innerhalb dieses Sub-Frequenzintervalls SFI zu erbringende elektrische Leistung an. Die lokale Steuereinheit CU einer Energiespeichersystemeinheit 2-i führt die von der Leitstelle 4 des Regelsystems 1 erhaltene Policies zur Leistungserbringung in Abhängigkeit einer gemessenen Netzfrequenz f des Stromnetzes automatisch aus. Vorzugsweise überträgt die lokale Steuereinheit CU dann eine entsprechende Rückmeldung zurück an die Leitstelle 4 des Regelsystems 1, welche die Ausführung der erhaltenen Policy meldet. Die Netzfrequenz f des Stromnetzes SN wird vorzugsweise durch eine lokale Frequenzmesseinheit FME innerhalb der Energiespeichersystemeinheiten 2-i gemessen. Vorzugsweise weisen die verschiedenen Energiespeichersystemeinheiten 2-i des Regelsystems 1 jeweils eine lokale Frequenzmesseinheit FME zur Messung der Netzfrequenz f des Stromnetzes SN auf.

Bei einer möglichen Ausführungsform gibt das Regelsystem 1 eine positive oder eine negative Primärregelleistung PRL an das Stromnetz SN zur Netzstabilisierung ab. Bei einer alternativen Ausführungsform kann das Regelsystem 1 eine Sekundärregelung SRL zur Erhaltung der Netzfrequenzstabilität bereitstellen. Mit der Sekundärregelung wird ebenfalls versucht, ein Gleichgewicht zwischen physikalischem Stromangebot und Stromnachfrage nach Auftreten einer Differenz wiederherzustellen. Im Gegensatz zur Primärregelung PR wird bei der Sekundärregelung SR nur die Situation in der jeweiligen Regelzone inklusive des Stromaustausches mit anderen Regelzonen betrachtet. Hierfür werden die geplanten mit den tatsächlichen Leistungsflüssen zu anderen Regelzonen verglichen und ausgeregelt. Es kann sichergestellt werden, dass ein Entgegenarbeiten von MRL und SRL verhindert wird. Primär- und Sekundärregelung können zeitgleich starten. Der sekundäre Regelvorgang löst vorzugsweise nach Ablauf weniger Minuten den primären Regelvorgang ab, sodass die Primärregelung wieder zur Verfügung steht.

Die Leitstelle 4 des Regelsystems 1 teilt das Frequenzabweichungsintervall FAI symmetrisch oder asymmetrisch in verschiedene Sub-Frequenzintervalle auf. Wie in Fig. 1 dargestellt, kann das Frequenzabweichungsintervall FAI bei einer möglichen Ausführungsform symmetrisch um eine Nominal-Netzfrequenz fₙₒₘ von 50 Hz liegen und einen Frequenzbereich von +/-200 mHz umfassen. Die untere Grenzfrequenz fᵤ des Frequenzabweichungsintervalls FAI ist dabei 49,8 Hz und die obere Grenzfrequenz fₒ des Frequenzabweichungsintervalls beträgt 50,2 Hz, wie in Fig. 1 dargestellt.

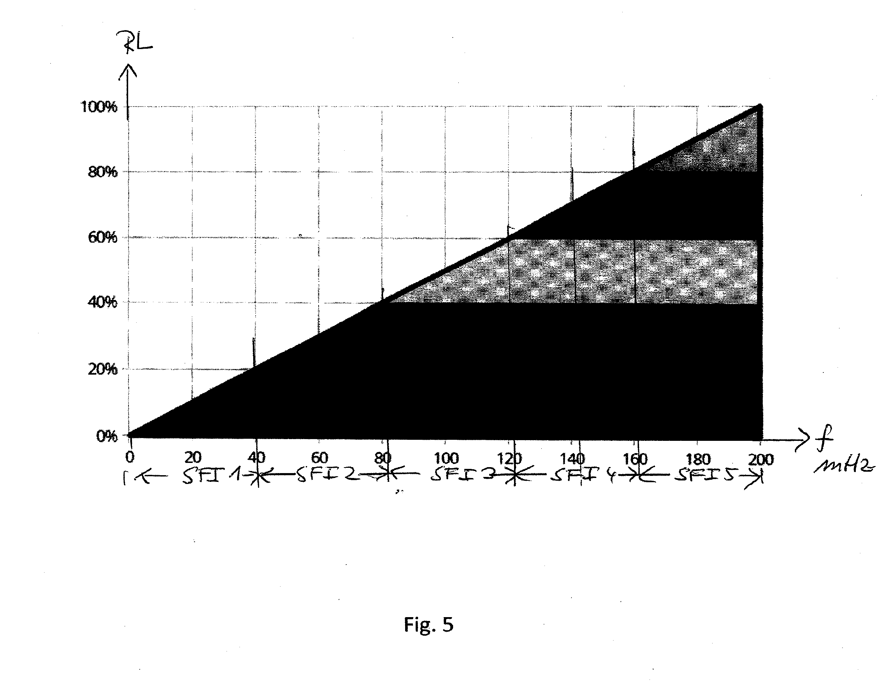

Fig. 5 zeigt ein Ausführungsbeispiel, bei dem die Leitstelle 4 des Regelsystems 1 das Frequenzabweichungsintervall FAI beidseitig symmetrisch in verschiedene Sub-Frequenzintervalle SFI mit gleichem Frequenzumfang aufteilt. Bei dem in Fig. 5 dargestellten Beispiel wird das Frequenzabweichungsintervall FAI beidseitig in fünf verschiedene Sub-Frequenzintervalle SFI-1, SFI-2, SFI-3, SFI-4, SFI-5 aufgeteilt. Jedes Sub-Frequenzintervall SFI umfasst bei dem dargestellten Ausführungsbeispiel einen Bereich von 40 mHz. Für jedes Sub-Frequenzintervall SFI kann die Leitstelle 4 des Regelsystems 1 einen zugehörigen ESS-Cluster bilden. Jedem Sub-Frequenzintervall SFI werden dabei unterschiedliche Energiespeichersystemeinheiten ESS 2-i zur Bildung des ESS-Clusters für das jeweilige Sub-Frequenzintervall SFI durch die Leitstelle 4 zugeteilt, wobei der gebildete ESS-Cluster einen Leistungsanteil an der durch das Regelsystem 1 zu erbringenden Regelleistung RL in dem jeweiligen Sub-Frequenzintervall SFI liefert. Die Leitstelle 4 berechnet die Frequenzaufteilung und die Zuteilung der Energiespeichersystemeinheiten 2-i und verteilt entsprechende Policies zur Leistungserbringung an die verschiedenen Energiespeichersystemeinheiten 2-i. Innerhalb jedes Sub-Frequenzintervalls SFI erbringt jede Energiespeichersystemeinheit ESS die Regelleistung linear von Nullleistung bis zu einer maximalen Regelleistung. Die Energiespeichersystemeinheiten 2-i mit zugewiesenen Sub-Frequenzintervallen SFI nahe der Nominal-Netzfrequenz fₙₒₘ des Stromnetzes SN verbringen daher im Vergleich zur herkömmlichen Betriebsweise einen größeren Anteil ihrer Betriebszeit bei höheren Leistungen P und arbeiten somit effektiver aufgrund des höheren Wirkungsgrades, insbesondere des höheren Wirkungsgrades der darin enthaltenen Wechselrichter WR. Die Energiespeichersystemeinheiten 2-i mit zugewiesenen Sub-Frequenzintervallen SFI abseits der Nominal-Netzfrequenz fₙₒₘ verbringen demgegenüber einen größeren Anteil ihrer Betriebszeit bei Nullleistung, sodass auch hier kein elektrischer Verlust entsteht. Beide Steigerungen wirken sich somit günstig auf den Gesamtwirkungsgrad η des Systems aus, da höhere Wirkungsgrade erzielt werden und Mindestverlustleistungen vermieden werden. Die Anzahl der verschiedenen Sub-Frequenzintervalle SFI der entsprechenden ESS-Cluster kann variieren. Bei dem in Fig. 5 dargestellten Ausführungsbeispiel wird das Frequenzabweichungsintervall FAI symmetrisch in fünf verschiedene Sub-Frequenzintervalle SFI mit gleichem Frequenzumfang durch die Leitstelle 4 unterteilt.

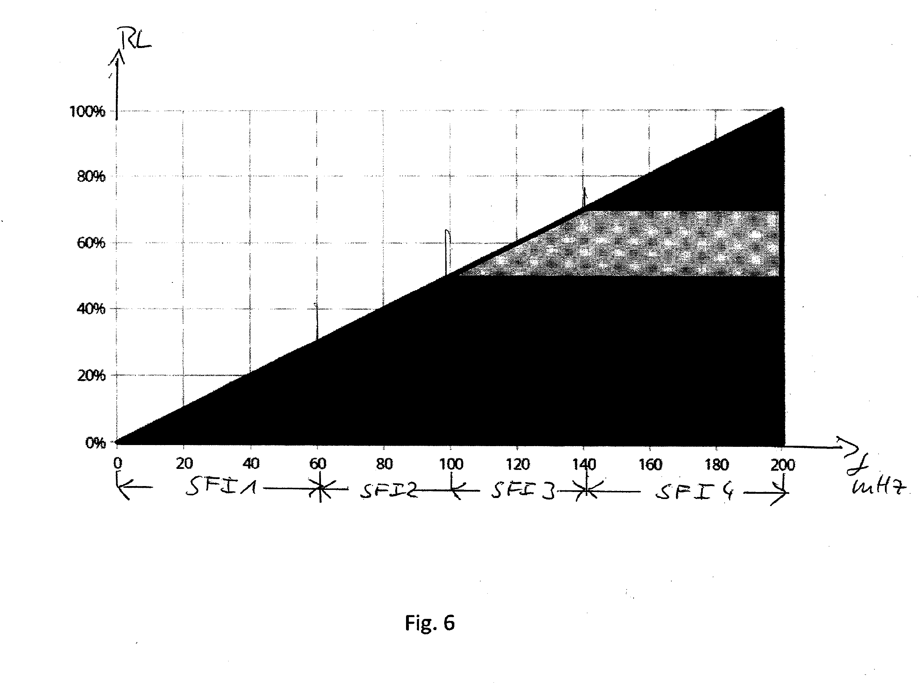

Bei dem in Fig. 6 dargestellten weiteren Ausführungsbeispiel erfolgt durch die Leitstelle 4 des Regelsystems 1 eine asymmetrische Aufteilung des Frequenzabweichungsintervalls FAI. Bei dem in Fig. 6 dargestellten Beispiel erfolgt eine Aufteilung des Frequenzabweichungsintervalls FAI in vier Sub-Frequenzintervalle SFI-1, SFI-2, SFI-3, SFI-4. Bei dem dargestellten Beispiel besitzen das erste und das vierte Sub-Frequenzintervall einen Frequenzumfang von 60 mHz, während die beiden in der Mitte gelegenen Sub-Frequenzintervalle SFI-2, SFI-3 lediglich einen Frequenzumfang von 40 mHz haben. Bei dem in Fig. 6 dargestellten Beispiel besitzt beispielsweise der für das erste Sub-Frequenzintervall SFI-1 vorgesehene ESS-Cluster I fünfzehn Energiespeichersystemeinheiten 2-i und erbringt eine Regelleistung RL, insbesondere eine Primärregelleistung PRL, in dem Frequenzbereich zwischen 0 und 60 mHz. Der zweite für das zweite Sub-Frequenzintervall SFI-2 vorgesehene ESS-Cluster II umfasst beispielsweise zehn Energiespeichersystemeinheiten 2-i zur Erbringung einer Primärregelung PL in einem Frequenzbereich zwischen 60 mHz und 100 mHz. Der dritte ESS-Cluster III umfasst beispielsweise zehn Energiespeichersystemeinheiten 2-i zur Erbringung einer Regelleistung RL in einem Frequenzbereich zwischen 100 mHz und 140 mHz. Der vierte ESS-Cluster IV umfasst beispielsweise zehn Energiespeichersystemeinheiten 2-i zur Erbringung einer Regelleistung RL in einem Frequenzbereich von 140 mHz bis 200 mHz. In dem angegebenen Beispiel würde bei einer Frequenzabweichung Δf von 60 mHz von der Nominalfrequenz fₙₒₘ der ESS-Cluster I seine maximale von der Policy vorgegebene Regelleistung RL erbringen während alle anderen Cluster keine Regelleistung erbringen. Bei einer Frequenzabweichung Δf von 80 mHz von der Nominalfrequenz fₙₒₘ wird der erste ESS-Cluster I die maximale Regelleistung erbringen und der zweite ESS-Cluster II 50 % der im zugewiesenen maximalen Regelleistung. Die beiden übrigen Cluster III und IV würden in diesem Falle keine Regelleistung RL erbringen.

Die Anzahl der ESS-Cluster ist bei dem erfindungsgemäßen Regelsystem 1 variabel einstellbar. Darüber hinaus können auch die Grenzen bzw. Grenzfrequenzen der jeweiligen Cluster variabel eingestellt werden. Es wird auf jeden Fall durch die Leitstelle 4 sichergestellt, dass die Addition der Leistungskurven der einzelnen ESS-Cluster wieder die gleiche Regelleistung-Gesamtkurve ergibt, die sich bei der Regelleistungsverteilung ohne Clusterung ergeben würde. Es werden unterschiedliche ESS-Cluster für positive und negative Regelleistung gebildet, wobei die Leistungsfähigkeit der einzelnen ESS-Speichereinheit entscheidet, welchem ESS-Cluster sie durch die Leitstelle 4 zugeordnet bzw. zugeteilt wird. Eine Energiespeichersystemeinheit 2-i mit einem Energiespeicher ES, dessen Ladezustand SOC sich erheblich vom Mittel- bzw. Normalwert entfernt hat, kann beispielsweise zur Erbringung einer positiven Primärregelleistung pPRL einem Cluster P1 und zur Erbringung einer negativen Regelleistung nRL einem anderen Cluster N3 zugeordnet werden. Die Δ- bzw. Grenzfrequenzen und Leistungswerte werden von der Leitstelle 4 des Regelsystems 1 berechnet und über Policies zur Leistungserbringung an die verschiedenen Energiespeichersystemeinheiten 2-i verteilt.

Eine Policy, bzw. ein Regelsatz, der von der Leitstelle 4 des Regelsystems 1 einer Energiespeichersystemeinheit 2-i generiert wird, kann beispielsweise lauten:
Negative Regelleistung:
   Minimale Frequenz: 40 mHz
   Maximale Frequenz: 80 mHz
   Leistung: 15 KW
Positive Regelleistung:
   Minimale Frequenz: -80 mHz
   Maximale Frequenz: -120 mHz
   Leistung: 10 KW

Die Clusterbildung durch die Leitstelle 4 geschieht vorzugsweise auf Basis des Ladezustandes SOC des Energiespeichers ES der jeweiligen Energiespeichersystemeinheit. Dabei werden die Energiespeichersystemeinheiten 2-i zum einen für positive und negative Regelleistung entsprechend dem gemeldeten Ladezustand SOC durch die Leitstelle 4 sortiert. Die Reihenfolge entscheidet darüber, in welchem ESS-Cluster die jeweilige Energiespeichersystemeinheit 2-i eingesetzt wird. Auf diese Weise verteilt die Leitstelle 4 die Gesamtladung gleichmäßig über die Energiespeichersystemeinheiten ESS. Die einzelnen Energiespeichersystemeinheiten 2-i erhalten keine explizite Information, in welchem ESS-Cluster sie sich befinden, sondern erkennen nur die zugehörigen Frequenzbereiche.

Eine Energiespeichersystemeinheit ESS, deren Energiespeicher ES einen relativ hohen Ladezustand SOC hat, kann relativ viel elektrische Energie abgeben jedoch nur relativ wenig elektrische Energie aufnehmen. Hat beispielsweise eine Energiespeichersystemeinheit 2-1 einen Energiespeicher ES1 mit einem Ladezustand SOC von 90 %, eine zweite Energiespeichersystemeinheit 2-2 einen Energiespeicher ES2 mit einem Ladezustand SOC von 50 % und eine dritte Energiespeichersystemeinheit 2-3 mit einem Energiespeicher ES3, dessen Ladezustand SOC 10 % beträgt, kann eine getrennte Sortierung in eine positive und eine negative Regelleistung durch die Leitstelle 4 erfolgen. Bei dem dargestellten Beispiel ist die Energiespeichersystemeinheit 2-1 besser zur Erbringung einer positiven Regelleistung pRL geeignet als die Energiespeichersystemeinheiten 2-2 und 2-3. Dementsprechend werden die drei Energiespeichersystemeinheiten 2-1, 2-2, 2-3 in dieser Reihenfolge durch die Leitstelle 4 des Regelsystems 1 zur Erbrindung einer positiven Regelleistung pRL sortiert. Umgekehrt ist für die Erbringung einer negativen Regelleistung nRL die Energiespeichersystemeinheit 2-1 weniger geeignet als die beiden übrigen Energiespeichersystemeinheiten 2-2, 2-3. In diesem Fall können die Energiespeichersystemeinheiten zur Erbringung der negativen Regelleistung nRL durch die Leitstelle 4 wie folgt vorsortiert werden: 2-3, 2-2, 2-1.

Bei dem erfindungsgemäßen Regelsystem 1 erfolgt ein Clustering der Energiespeichersystemeinheiten 2-i. Die Leitstelle 4 bildet verschiedene ESS-Cluster bzw. in Abhängigkeit der Ladezustände SOC der in den Energiespeichersystemeinheiten 2-i enthaltenen Energiespeicher ES. Die Leitstelle 4 teilt das Frequenzabweichungsintervall FAI in Sub-Frequenzintervalle SFI auf und teilt in Abhängigkeit der Ladezustände SOC der in den Energiespeichersystemeinheiten 2-i enthaltenen Energiespeicher ES jedem Sub-Frequenzintervall unterschiedliche Energiespeichersystemeinheiten 2-i zur Bildung des jeweiligen ESS-Clusters für das jeweilige Sub-Frequenzintervall SFI zu.

Anschließend generiert die Leitstelle 4 eine Policy zur Leistungserbringung und überträgt die generierte Policy an die jeweilige Energiespeichersystemeinheit 2-i.

Die für eine Energiespeichersystemeinheit 2-i eines ESS-Clusters generierte Policy zur Leistungserbringung umfasst vorzugsweise die beiden Grenzfrequenzen des entsprechenden Sub-Frequenzintervalls SFI und eine durch die Energiespeichersystemeinheit 2-i innerhalb dieses Sub-Frequenzintervalls zu erbringende elektrische Leistung. Die lokale Steuereinheit CU der jeweiligen Energiespeichersystemeinheit führt die von der Leitstelle 4 erhaltene Policy zur Leistungserbringung automatisch in Abhängigkeit einer gemessenen Netzfrequenz f des Stromnetzes SN aus und überträgt anschließend eine Rückmeldung an die Leitstelle 4 des Regelsystems 1. Nach gewähltem Zuteilungsalgorithmus erfolgt beispielsweise eine lineare Aufteilung des Frequenzabweichungsintervalls FAI, wie in Fig. 5 dargestellt, wobei verschiedene ESS-Cluster gebildet werden. Dabei wird die angestrebte Maximalleistung der einzelnen ESS-Cluster festgelegt. Bei dem dargestellten Beispiel beträgt diese angestrebte Maximalleistung 0,2 x P_{PRLmax}. Die Grenzfrequenzen werden entsprechend gewählt, beispielsweise für ESS-Cluster I 0 bis 40 mHz und für Cluster II 40 bis 80 mHz, wie in Fig. 5 dargestellt. Anschließend werden die Energiespeichersystemeinheiten 2-i entsprechend ihrer Fähigkeit zur Erbringung von Regelleistung RL für positive Regelleistung pRL und negative Regelleistung nRL durch die Leitstelle 4 getrennt sortiert. Die für die Regelleistungsrichtung am besten geeigneten Energiespeichersystemeinheiten werden zum ersten ESS-Cluster I hinzugefügt, bis die angestrebte Zielleistung von ESS-Cluster I erreicht wird. Bei einer möglichen Ausführungsform werden die Leistungsgrenzen der Energiespeichersystemeinheiten 2-i etwas geringfügiger angesetzt als theoretisch möglich, um die Batterie bzw. Energiespeicher innerhalb der Energiespeichersystemeinheiten 2-i in einem optimalen Arbeitsbereich zu betreiben. Falls die Summe der Einzelleistungen in dem ESS-Cluster die angestrebte Zielleistung bis zu einem vorgegebenen Grenzwert leicht überschreiten sollten, wird der Betrag für die obere Frequenzgrenze des ESS-Clusters leicht erhöht und die untere Frequenzgrenze des nachfolgenden ESS-Clusters entsprechend leicht nach oben angepasst. Die nachfolgenden ESS-Cluster werden analog gebildet, wobei die Gesamtleistung der Cluster P_{PRLmax} einhält und die Frequenzobergrenze des letzten Clusters ESS V der oberen Grenzfrequenz des Frequenzabweichungsintervalls, beispielsweise 200 mHz, entspricht. Die Clusterbildung erfolgt nach einem entsprechenden Zuteilungsalgorithmus auch für die entgegengesetzte Regelleistungsrichtung unter Berücksichtigung der entsprechenden Vorzeichen. Die auf diese Weise gewonnenen Daten bzw. Informationen bilden dann den Bestandteil der Policies zur Leistungserbringung für die Energiespeichersystemeinheiten 2-i.

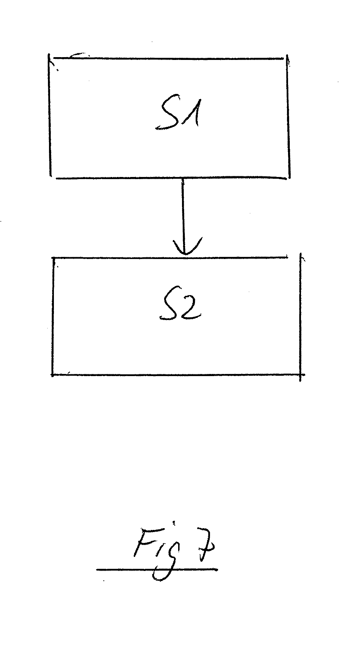

Fig. 7 zeigt ein Ablaufdiagramm zur Darstellung eines möglichen Ausführungsbeispiels des erfindungsgemäßen Verfahrens zur Erbringung einer Regelleistung RL für ein mit einer nominalen Netzfrequenz fₙₒₘ betriebenes Stromnetz SN bei Abweichen von der nominalen Netzfrequenz fₙₒₘ.

In einem ersten Schritt S1 wird ein zwischen einer minimalen Netzfrequenz fₘᵢₙ und einer maximalen Netzfrequenz fₘₐₓ um die nominale Netzfrequenz fₙₒₘ gelegenes Frequenzabweichungsintervall in Sub-Frequenzintervalle SFI durch eine Leitstelle 4 des Regelsystems aufgeteilt.

Anschließend erfolgt in einem Schritt S2 eine Zuteilung von Energiespeichersystemeinheiten 2-i des Regelsystems 1 zu den Sub-Frequenzintervallen SFI zur Bildung verschiedener ESS-Cluster für die verschiedenen Sub-Frequenzintervalle. Dabei liefern die gebildeten ESS-Cluster jeweils einen Leistungsanteil an der durch das Regelsystem 1 insgesamt zu erbringenden Regelleistung RL in dem jeweiligen Sub-Frequenzintervall SFI. Das Verfahren kann durch ein Computerprogramm ausgeführt werden, das auf einem Rechner bzw. Mikroprozessor läuft. Dieses Programm läuft vorzugsweise auf einer Steuereinheit der Leitstelle 4 des Regelsystems 1.

## Patentansprüche

1. Regelsystem (1) zur Erbringung einer Regelleistung, RL, für ein mit einer Nominal-Netzfrequenz (fₙₒₘ) betriebenes Stromnetz (SN) bei einer Abweichung von der Nominal-Netzfrequenz (fₙₒₘ),
wobei das Regelsystem (1) aufweist:
- mehrere Energiespeichersystemeinheiten, ESS, (2-i), die jeweils über einen Wechselrichter, WR, mit dem Stromnetz (SN) verbunden sind und jeweils mindestens einen Energiespeicher (ES) enthalten; und
- eine Leitstelle, LS, (4), die ein zwischen einer minimalen Netzfrequenz (fₘᵢₙ) und einer maximalen Netzfrequenz (fₘₐₓ) um die Nominal-Netzfrequenz (fₙₒₘ) gelegenes Frequenzabweichungsintervall (FAI) in Sub-Frequenzintervalle (SFI) aufteilt und in Abhängigkeit der Ladezustände (SOC) der in den Energiespeichersystemeinheiten, ESS, enthaltenen Energiespeicher (ES) jedem Sub-Frequenzintervall (SFI) unterschiedliche Energiespeichersystemeinheiten, ESS, (2-i) zur Bildung eines ESS-Clusters für das jeweilige Sub-Frequenzintervall (SFI) zuteilt, der einen Leistungsanteil an der durch das Regelsystem (1) zu erbringenden Regelleistung in dem jeweiligen Sub-Frequenzintervall (SFI) liefert.

2. Regelsystem nach Anspruch 1,
wobei die Energiespeichersystemeinheiten (ESS) jeweils eine lokale Steuereinheit (CU) aufweisen, die über ein Funknetz (3) oder ein leitungsgebundenes Datennetzwerk mit der Leitstelle, LS, (4) des Regelsystems verbunden (1) sind,
wobei die lokale Steuereinheit (CU) einer Energiespeichersystemeinheit, ESS, (2-i) den Ladezustand (SOC) des Energiespeichers (ES) der Energiespeichersystemeinheit, ESS, (2-i) an die Leitstelle, LS, (4) des Regelsystems (1) meldet.

3. Regelsystem nach Anspruch 2,
wobei die Leitstelle (4) des Regelsystems (1) die Energiespeichersystemeinheiten, ESS, entsprechend der gemeldeten Ladezustände (SOC) der in den Energiespeichersystemeinheiten, ESS, enthaltenen Energiespeicher (ES) entsprechend ihrer Fähigkeit zur Erbringung von Regelleistung, RL, für eine positive Regelleistung, pRL, und eine negative Regelleistung, nRL, getrennt sortiert.

4. Regelsystem nach einem der vorangehenden Ansprüche 1 bis 3,
wobei die Leitstelle (4) des Regelsystems (1) die lokalen Steuereinheiten (CU) der Energiespeichersystemeinheiten, ESS, (2-i) zur Abgabe einer positiven Regelleistung, pRL, an das Stromnetz (SN) über die Wechselrichter (WR) der Energiespeichersystemeinheiten, ESS, (2-i) steuert, falls die gemessene Netzfrequenz (f) des Stromnetzes (SN) unterhalb der Nominalnetzfrequenz (fₙₒₘ) liegt und
wobei die Leitstelle (4) des Regelsystems (1) die lokalen Steuereinheiten (CU) der Energiespeichersystemeinheiten, ESS, zur Abgabe einer negativen Regelleistung, nRL, an das Stromnetz (SN) über die Wechselrichter (WR) der Energiespeichersystemeinheiten, ESS, (2-i) steuert, falls die gemessene Netzfrequenz (f) des Stromnetzes (SN) oberhalb der Nominalnetzfrequenz (fₙₒₘ) liegt.

5. Regelsystem nach Anspruch 4,
- wobei die Leitstelle (4) des Regelsystems (1) zur Erbringung einer positiven Regelleistung, pRL, die dafür erforderlichen ESS-Cluster aus Energiespeichersystemeinheiten, ESS, (2-i) bildet, deren Energiespeicher (ES) hohe Ladezustände (SOC) aufweisen, und
- wobei die Leitstelle (4) zur Erbringung einer negativen Regelleistung, nRL, die dafür erforderlichen ESS-Cluster aus Energiespeichersystemeinheiten, ESS, (2-i) bildet, deren Energiespeicher (ES) niedrige Ladezustände (SOC) aufweisen.

6. Regelsystem nach einem der vorangehenden Ansprüche 3 bis 5,
- wobei die Leitstelle (4) zur Erbringung einer Regelleistung, RL, einem für das Sub-Frequenzintervall (SFI) vorgesehenen ESS-Cluster die entsprechend der Ladezustände (SOC) sortierten Energiespeichersystemeinheiten, ESS, (2-i) der Reihe nach so lange hinzufügt, bis ein durch den ESS-Cluster zu erbringender Leistungsanteil an der durch das Regelsystem (1) insgesamt zu erbringenden Regelleistung, RL, innerhalb des Sub-Frequenzintervalls (SFI) durch den entsprechenden ESS-Cluster erbracht wird.

7. Regelsystem nach einem der vorangehenden Ansprüche 4 bis 6,
wobei die Leitstelle (4) des Regelsystems (1) verschiedene ESS-Cluster sowohl für eine durch das Regelsystem zu erbringende positive Regelleistung, pRL, als auch für eine durch das Regelsystem (1) zu erbringende negative Regelleistung, nRL, bildet.

8. Regelsystem nach einem der vorangehenden Ansprüche 1 bis 7,
wobei die Leitstelle (4) des Regelsystems (1) nach erfolgter ESS-Clusterbildung mindestens eine Policy zur Leistungserbringung für jede Energiespeichersystemeinheit, ESS, (2-i) des Regelsystems generiert und an die lokale Steuereinheit (CU) der jeweiligen Energiespeichersystemeinheit, ESS, (2-i) überträgt.

9. Regelsystem nach Anspruch 8,
wobei die für eine Energiespeichersystemeinheit, ESS, eines ESS-Clusters generierte Policy zur Leistungserbringung die beiden Grenzfrequenzen des entsprechenden Sub-Frequenzintervalls (SFI) und eine durch die Energiespeichersystemeinheit, ESS, (2-i) innerhalb dieses Sub-Frequenzintervalls (SFI) zu erbringende Leistung angibt.

10. Regelsystem nach Anspruch 9,
wobei die lokale Steuereinheit (CU) einer Energiespeichersystemeinheit, ESS, (2-i) die von der Leitstelle, LS, (4) des Regelsystems (1) erhaltenen Policies zur Leistungserbringung in Abhängigkeit einer gemessenen Netzfrequenz (f) des Stromnetzes (SN) automatisch ausführt und eine entsprechende Rückmeldung an die Leitstelle, LS, (4) des Regelsystems (1) überträgt.

11. Regelsystem nach einem der vorangehenden Ansprüche 1 bis 10,
wobei die Energiespeichersystemeinheiten, ESS, (2-i) des Regelsystems (1) jeweils eine lokale Frequenzmesseinheit (FME) zur Messung der Netzfrequenz (f) des Stromnetzes (SN) aufweisen.

12. Regelsystem nach einem der vorangehenden Ansprüche 1 bis 11,
wobei die Leitstelle, LS, (4) des Regelsystems (1) das Frequenzabweichungsintervall (FAI) symmetrisch oder asymmetrisch in verschiedene Sub-Frequenzintervalle (SFI) aufteilt.

13. Regelsystem nach einem der vorangehenden Ansprüche 1 bis 12,
wobei das Regelsystem (1) eine positive oder eine negative Primärregelleistung, PRL, an das Stromnetz (SN) zur Netzstabilisierung abgibt.

14. Stromnetz (SN) mit einem Übertragungsnetz (7) und einem Verteilnetz (8), an das mindestens ein Regelsystem (1) nach einem der vorangehenden Ansprüche 1 bis 13 angeschlossen ist.

15. Leitstelle, LS, (4) für ein Regelsystem (1) nach einem der vorangehenden Ansprüche 1 bis 13,
wobei die Leitstelle, LS, (4) eine Steuereinheit aufweist, die ein zwischen einer minimalen Netzfrequenz (fₘᵢₙ) und einer maximalen Netzfrequenz (fₘₐₓ) um eine Nominalnetzfrequenz (fₙₒₘ) gelegenes Frequenzabweichungsintervall (FAI) in Sub-Frequenzintervalle (SFI) aufteilt und in Abhängigkeit von gemeldeten Ladezuständen (SOC) von in den Energiespeichersystemeinheiten, ESS, (2-i) enthaltenen Energiespeichern (ES) jedem Sub-Frequenz-Intervall (SFI) unterschiedliche Energiespeichersystemeinheiten, ESS, (2-i) zur Bildung eines ESS-Clusters für das jeweilige Sub-Frequenz-Intervall (SFI) zuteilt.

16. Energiespeichersystemeinheit, ESS, (2-i) für ein Regelsystem (1) nach einem der vorangehenden Ansprüche 1 bis 13, mit
- mindestens einem Energiespeicher (ES) zur Speicherung elektrischer Energie,
- einem Wechselrichter (WR) zur Stromwandlung zwischen Wechselstrom und Gleichstrom, der an das Stromnetz (SN) angeschlossen ist, und mit
- einer lokalen Steuereinheit (CU), die über eine Schnittstelle mit der Leitstelle, LS, (4) des Regelsystems (1) verbunden ist, wobei die lokale Steuereinheit (CU) der Leitstelle, LS, (4) über die Schnittstelle den momentanen Ladezustand (SOC) des Energiespeichers (ES) meldet und über die Schnittstelle mindestens eine von der Leitstelle, LS, (4) generierte Policy zur Leistungserbringung empfängt.

17. Energiespeichersystemeinheit nach Anspruch 16,
wobei die Energiespeichersystemeinheit, ESS, (2-i) ferner eine lokale Frequenzmesseinheit (FME) aufweist, die eine momentane Netzfrequenz (f) des Stromnetzes (SN) misst und an die lokale Steuereinheit (CU) der Energiespeichersystemeinheit, ESS, (2-i) meldet.

18. Energiespeichersystemeinheit nach Anspruch 16 oder 17,
wobei die lokale Steuereinheit (CU) der Energiespeichersystemeinheit, ESS, (2-i) die von der Leitstelle, LS, (4) empfangene Policy zur Leistungserbringung in Abhängigkeit von der gemessenen momentanen Netzfrequenz (f) des Stromnetzes (SN) durch Ansteuerung des Wechselrichters (WR) der Energiespeichersystemeinheit, ESS, (2-i) automatisch ausführt.

19. Verfahren zum Erbringen einer Regelleistung für ein mit einer nominalen Netzfrequenz (fₙₒₘ) betriebenes Stromnetz (SN) bei Abweichen von der nominalen Netzfrequenz (fₙₒₘ) mit den Schritten:
(a) Aufteilen (S1) einer zwischen einer minimalen Netzfrequenz (fₘᵢₙ) und einer maximalen Netzfrequenz (fₘₐₓ) um die nominale Netzfrequenz (fₙₒₘ) gelegenes Frequenzabweichungsintervall (FAI) in Sub-Frequenzintervalle (SFI) durch eine Leitstelle, LS, (4) eines Regelsystems (1); und
(b) Zuteilen (S2) von Energiespeichersystemeinheiten, ESS, (2-i) des Regelsystems (1) zu den Sub-FrequenzIntervallen (SFI) zur Bildung von ESS-Clustern für die verschiedenen Sub-Frequenzintervalle (SFI),
wobei die gebildeten ESS-Cluster jeweils einen Leistungsanteil an der durch das Regelsystem (1) insgesamt zu erbringenden Regelleistung in dem jeweiligen Sub-Frequenzintervall (SFI) liefern.
